# EUROPEAN PATENT APPLICATION

(11) **EP 3 343 849 A1**
(43) Date of publication of application: **04.07.2018**
(21) Application number: 16290251.4
(22) Date of filing: 28.12.2016
(51) Int. Cl.: H04L 12/801, H04W 28/02, H04L 12/853, H04L 12/841

(54) **SCHEDULING DATA PACKETS**

(71) Applicant: Alcatel Lucent, 91620 Nozay (FR)
(72) Inventor: Tsang, Ing-Jyh, 2018 Antwerpen (BE); Olaziregi, Nikolas, 2018 Antwerpen (BE); De Schepper, Koen A. E., 2018 Antwerpen (BE)
(74) Representative: IP HILLS NV

(57) **Abstract**

According to an embodiment, the disclosure relates to a networking device (100) for scheduling (122) the forwarding of data packets (121) from source to destination endpoints (110-112), the device comprising a rating module configured to determine link properties of a data packet's path from the device to a destination endpoint; and a scheduling module configured to schedule the forwarding of the data packet based on the link properties.

## Description

### Technical Field

The disclosure relates to the field of network devices that schedule the transmission of packets over a network interface such as for example switches, routers and gateways.

Within such devices queues are used to buffer packets temporarily before they are forwarded. The determination of which queues are served in which order is then done by a scheduler according to a certain scheduling policy.

### Background

Several techniques may be used to schedule data packets in a network from source to destination endpoints, such as for example first-in first-out, FIFO, or priority based scheduling such as Deficit Weighted Round Robin, DWRR, Weighted-Fair Queuing, WFQ, and Start-Time Fair Queuing, STFQ.

In these techniques data packets are scheduled based on an arrival order, elapsed time in the queue, time from source to the queue and/or remaining time in respect to a deadline when deadline information is available.

In other techniques such as Least Slack Time First, LSTF, or Earliest Deadline First, EDF, deadline timing information is taken into account together with a derived time to queue and an elapsing time in the queue, which allows algorithms to optimally schedule which data packets need to be served first. Moreover, in S.-T. Chuang, A. Goel, N. McKeown and B. Prabhakar, "Matching output queueing with a combined input/output-queued switch", in IEEE Journal on Selected Areas in Communications, 1999, a Head-Of-Line, HOL, blocking problem is taken into account such that data packets are optimally scheduled in a Combined Input/Output-Queue, CIOQ, switch.

### Summary

According to the above solutions, each parameter used to schedule the forwarding of the data packets is based on occurrences prior to the egress of it. This is disadvantageous because a packet can still arrive beyond its deadline due to occurrences on the remaining path although it left the networking device according to the deadline.. It is an objective of the present disclosure to alleviate this drawback and to provide a solution for scheduling data packets in a more efficient way.

This objective is achieved, according to a first aspect, by a networking device for scheduling the forwarding of data packets from source to destination endpoints, the device comprising:
- a rating module configured to determine link properties of a data packet's path from the device to a destination endpoint; and
- a scheduling module configured to schedule the forwarding of the data packet based on the link properties.

The networking device receives data packets from source endpoints and each data packet is forwarded to a destination endpoint according to destination information specified in the data packet.

Each received data packet may be characterized by an arrival time and/or order in the queue of the networking device. Prior to the egress of the networking device, the data packets are scheduled, i.e., the time and/or order in which they leave the queue. In order to perform the scheduling in an efficient way, link properties of a path which will be followed by a data packet is taken into account. By the link properties, the networking device can make a much better assessment of how the scheduling should be perform resulting in a more efficient scheduling policy.

In order to have an optimal end-to-end packet scheduling, remaining path conditions are taken into account. In other words, since the networking device takes into account the forward path of data packets an optimal end-to-end performance is achieved for all the flows

According to an embodiment, the link properties comprise an achievable packet rate of the path and the scheduling module is further configured to schedule the data packet based on the achievable packet rate.

The link properties determined by the rating module comprise an achievable packet rate of the path which a data packet will follow from the networking device to its destination endpoint. The achievable packet rate may for example correspond to an achievable throughput from the networking device to the destination endpoint.

Data packets may, for example, be transmitted from high to low link rates in the path which is followed. The available packet rate may correspond to these link rates, wherein a lowest link rate may be determinative theretofore.

The available throughput may either be determined by a path's configuration, be measured or be estimated.

The scheduling module will take into account the achievable packet rate when scheduling the data packets. If, for example, a throughput of a path would result in a queue of data packets at a destination endpoint if the forwarding device would forward data packets at a high rate, it is more efficient to delay the forwarding. In other words, the forwarding device takes into account the serialization time.

By delaying the forwarding of data packets destined to one or more destination endpoints, time is made available for the networking device to handle other data packets destined for other destination endpoints which may process them at a higher rate.

According to an embodiment, the device is further configured to receive from the destination endpoint the achievable packet rate.

Instead of determining the achievable packet rate by the path's configuration or by measuring or estimating it, the destination endpoint may also send this data to the networking device. This may, for example, be performed by a packet sent by the endpoint. The packet may further be sent upon a request sent by the networking device.

The advantage of receiving the achievable throughput is that it is more precise compared to a measured or estimated value.

According to an embodiment, the received achievable packet rate corresponds to an air-interface bandwidth between the endpoint and an access point.

The endpoint may be connected as a Wi-Fi station, STA, to an access point, AP. The transmission by the AP to the endpoint will be performed at a bandwidth, the air-interface bandwidth, which will correspond to the received achievable throughput.

In most cased the air-interface bandwidth will be the determining factor in the total packet rate for data packets sent from the networking device to the STAs. It is therefore advantageous that the received achievable packet rate immediately corresponds to this air-interface bandwidth.

According to an embodiment, the link properties comprise a one-way delay between the device and destination endpoint.

A one-way delay, OWD, corresponds to the time needed for a packet to be transmitted from a source to a destination endpoint. In other words, the rating module determines to time needed to transmit a data packet from the networking device to its destination endpoint.

This is beneficial since the networking device may schedule the data packets such that they are received in time at the destination endpoints.

According to an embodiment, the scheduling module is a deadline-aware scheduler and the scheduling module is further configured to calculate a deadline of the data packet based on the one-way delay.

In other words, a deadline aware scheduler is obtained that not only takes into account the deadline information of the packets, but that is also able to determine the estimated arrival time of a packet at the destination node. This results in a much more precise scheduler because packets with an earlier deadline but a short OWD may be scheduled after packets with a later deadline but with a larger OWD.

According to a second aspect, the disclosure relates to a method for scheduling the forwarding of data packets from source to destination endpoints, the method comprising:
- determining link properties of a data packet's path from the device to a destination endpoint; and
- scheduling the forwarding of the data packet based on the link properties.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to third aspect.

According to a fifth aspect, the disclosure relates to a data processing system programmed for carrying out the method according to the second aspect.

### Brief Description of the Drawings

Fig. 1 illustrates a networking device and destination endpoints according to an embodiment of the disclosure;
Fig. 2 illustrates a networking device comprising a classifier;
Fig. 3 illustrates subscribers connected to wireless access points;
Fig. 4 illustrates a scheduler taking into account one way delays;
Fig. 5 illustrates a network comprising the networking device according to an embodiment of the disclosure;
Fig. 6 Fig. 6 illustrates an embodiment for a remote radio head management quality of service at an access node; and
Fig. 7 illustrates a suitable computing system for performing steps according to embodiments of the disclosure.

### Detailed Description of Embodiment(s)

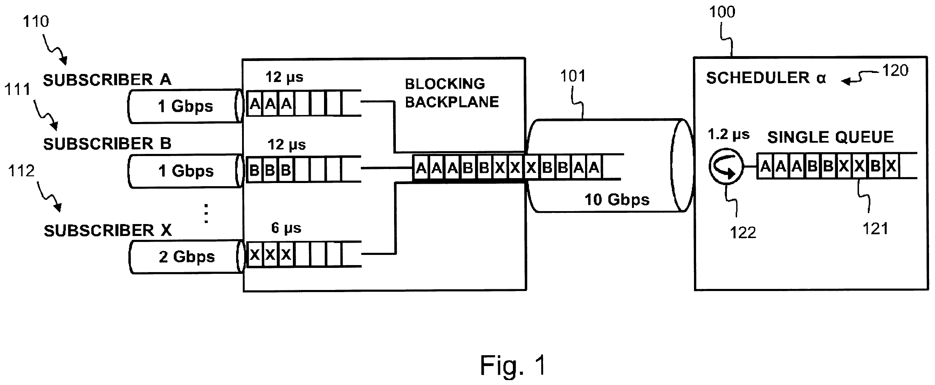

Fig. 1 illustrates a networking device 100 and destination endpoints 110-112. The networking device 100 receives data packets, for example in a single queue 121 and scheduler α 120 will schedule these data packets. The queue at the scheduler α 120 has an egress rate, E_{R}, of 10Gbps 101, thus assuming packets of 1500Bytes, the serialization time of a packet is 1.2µs. At the destination points, each subscriber has a subscriber link rate S_{R}. For example, subscriber A 110 and subscriber B have both a subscriber link rate of 1 Gbps, while subscriber X 112 has a subscriber link rate of 2Gbps. Thus subscriber A 110 and B 111 will serve a data packet at a serialization time of 12µs, consequently then times slower compared to the scheduler α 120. Subscriber X 112 will serve a data packet at a serialization time of 6µs.

Scheduler α 120 can be optimized to take advantage of this information, as data packets destined for subscriber A 110 and subscriber B 111 can be paced by a factor E_{R}/S_{R}. In this case, a train of packets at queue 121 destined for subscriber A 110 can be scheduled 122 each 12µs instead of each 1.2µs, or 1/10^{th} of the scheduler 120 egress rate, since otherwise those packets to subscriber A 110 would be queued anyway at the subscriber's 110 interface as they would arrive at a faster pace than the subscriber link rate S_{R}.

In other words, when there are two consecutive packets to subscriber A 110 in the queue of data packets 121, the scheduler α 120 schedules 122 the first packet destined for subscriber A 110, wait nine other packets to be served and then schedules the next packet for subscriber A 110. In the meantime the scheduler α 120 can schedule other data packets for other subscribers, such as subscriber B 111 and subscriber X 112. For example, subscriber X 112 may be served every five packets, as the factor E_{R}/S_{R} for this subscriber is five.

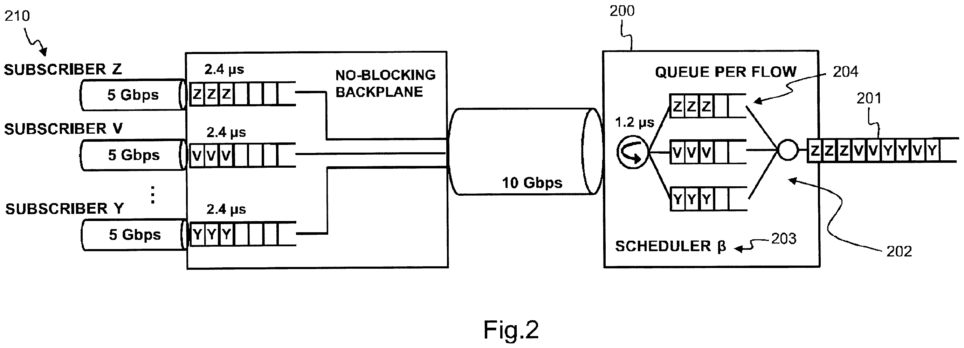

According to an embodiment, the data packets received by a networking device may first be classified into flows prior to the scheduling. Fig. 2 illustrates such an embodiment. Received data packets 201 will first be classified 202 by the networking device 200, for example through a Fair Queueing, FQ, scheme. The data packets may for example be classified in flows per subscriber. Next, a scheduler β 203 schedules each data packet of the flows depending on the serialization time of the subscribers. For example, the serialization time of subscriber Z 210 equals to 2.4µs while the serialization time of scheduler β equals to 1.2µs. The serialization times corresponds to link rates, meaning the factor E_{R}/S_{R} is two. The flow of data packets 204 destined for subscriber Z 210 may thus be scheduled every two consecutive packets and would then give opportunity to another queue of flows destined for another subscriber.

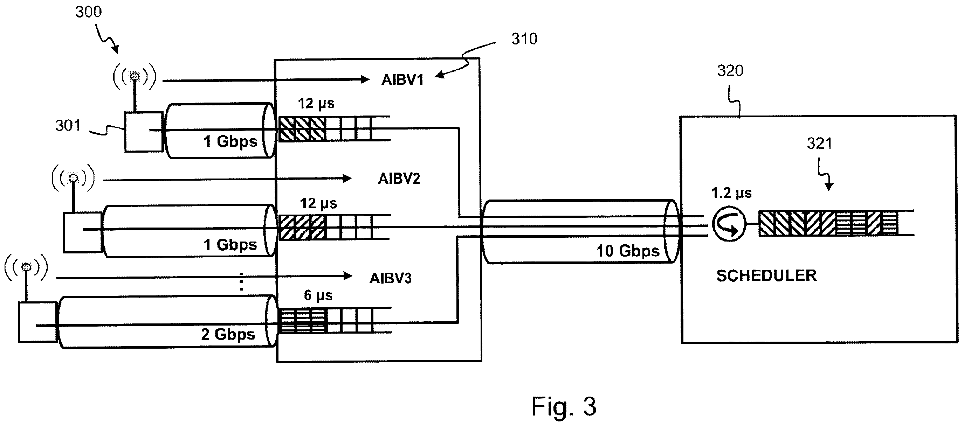

According to an embodiment, an endpoint may also be connected to an access point. Fig. 3 illustrates such a configuration. The access point 300 is connected to Wi-Fi stations, STAs, and will forward packets through an air-interface bandwidth, AIBV. Each endpoint sends its AIBV to the networking device 320 via, for example, a Remote Radio Head, RRH. For example endpoint 301 sends AIBV1 310 to the device 320. The networking device 320 may then schedules data packets 321 based on the AIBV of each endpoint.

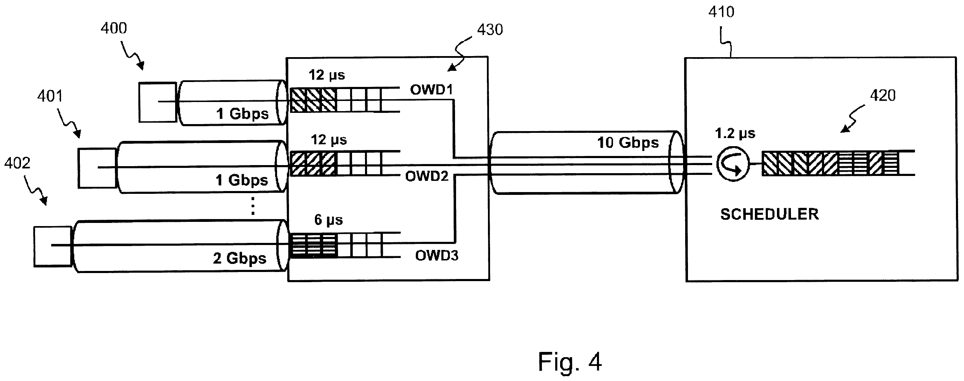

According to an embodiment, the scheduler may also take into account a one way delay, OWD, to a destination endpoint. In Fig. 4 a queue 420 comprising data packets destined for different endpoints 400, 401 and 402 may take into account the elapsed time in the queue 420 or possibly the slack time, and for each subscriber at the endpoints 400, 401 and 402 the remaining delay to it. The OWDs for each destination endpoint may be determined by configuration of the network, by measurement or by estimation.

The scheduling by scheduler α 120 and/or scheduler β 203 may also be coupled with other schemes such as Earliest Deadline First, EDF, or Least Slack Time First, LSTF, to further improve and produce a more efficient scheduler for end-to-end packet transport. Each endpoint may also sends it OWD to the device 410, such as, for example, endpoint 400 which informs its OWD1 430 to the device 410. Depending on the value of the received OWD1, the scheduler in the networking device 410 would schedule data packets destined for endpoint 400 takes into account the longest path to take in addition to elapse time in the queue 420 and the factor E_{R}/S_{R}.

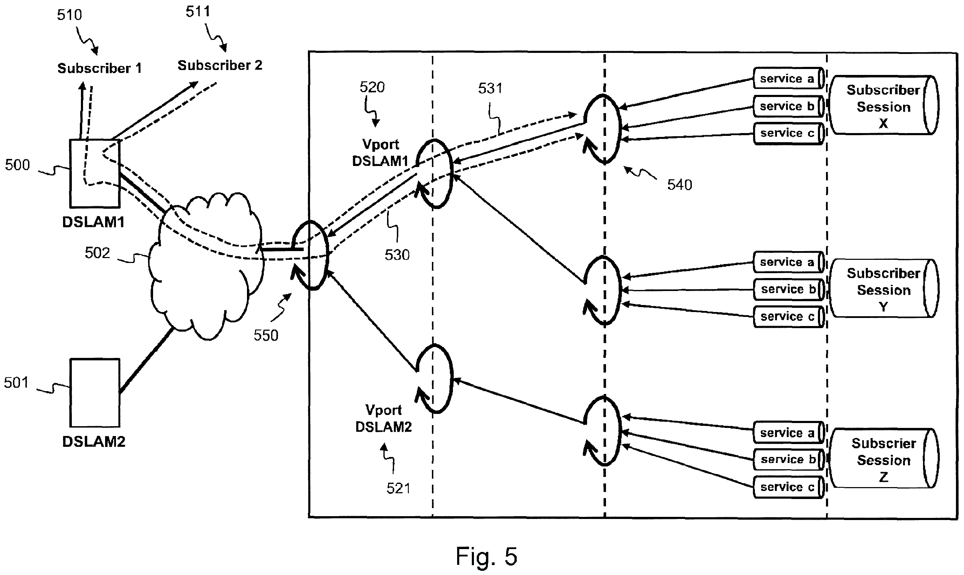

The networking device may also be implemented in a Broad Network Gateway, BNG. Fig. 5 illustrates such an implementation. The BNG implements hierarchical Quality of Service, QoS, by defining policers, queues and schedulers per subscriber 510 and 511, per Digital subscriber line access multiplexer, DSLAM, 501 and 202, per DSLAMNport 520 and 521, and interface port 550.

The DSLAMs 500, 501 are connected to the interface port 550 via Metro Ethernet Aggregation Network.

The scheduler 540, or the scheduler 520 as well, may schedule received data packets by taking into account the link properties of the paths 530 and 531 to subscribers 510 and 511. This may, for example, be a received AIBV of each subscriber, but also a remaining forwarding time, OWD.

According to an embodiment, the scheduler 540 may also be implemented in a mobile network through a Packet Data Network, PDN, Gateway, PGW.

In other words, the scheduler may be implemented in a BNG for fixed access subscribers, while or mobile subscribers it may be implemented in a Packet Data Network, PDN, Gateway, PGW.

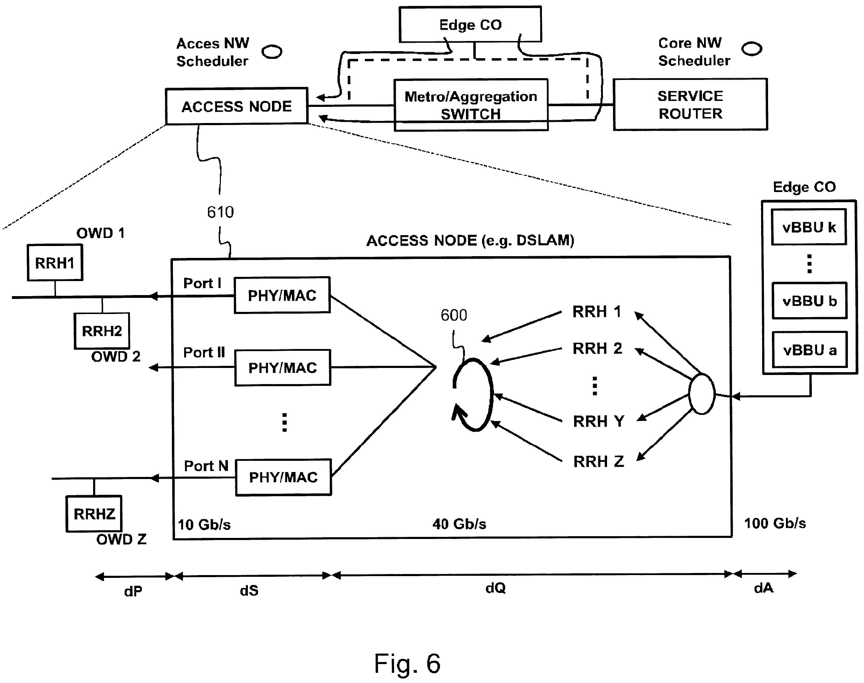

Fig. 6 illustrates an embodiment for a RRH management QoS at an Access Node 610 using an intranode scheduler 600 that takes into account different intranode link rates and different OWDs to RRH.

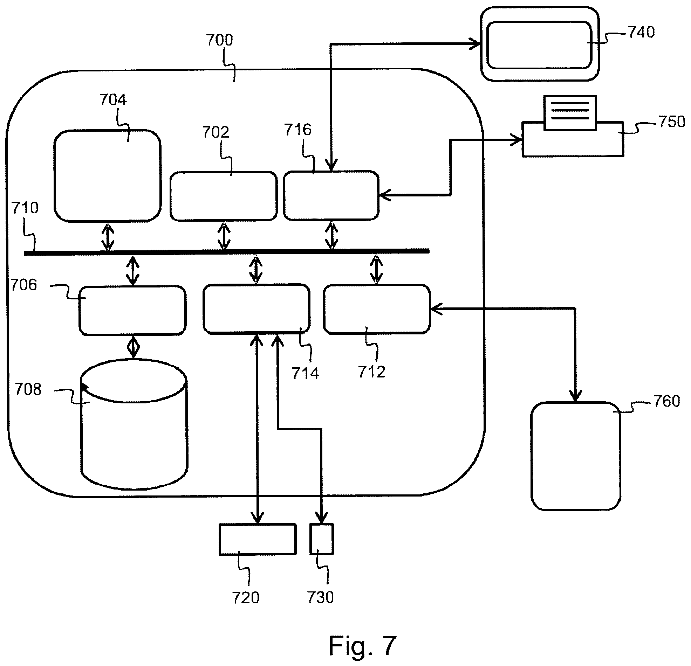

Fig. 7 shows a suitable computing system 700 for performing the steps according to the above embodiments. Computing system 700 may be used as a networking device 100 for scheduling data packets. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, etc. Communication interface 712 may comprise any transceiver-like mechanism such as for example one or more Ethernet interfaces that enables computing system 700 to communicate with other devices and/or systems 760. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used. The system 700 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (100) for scheduling (122) the forwarding of data packets (121) from source to destination endpoints (110-112, 400-402), the device comprising:
- a rating module configured to determine link properties of a data packet's path from the device (100) to a destination endpoint (110-112, 400-402); and
- a scheduling module configured to schedule the forwarding of the data packet based on the link properties.

2. The networking device (100) according to claim 1, wherein the link properties comprise an achievable packet rate of the path and the scheduling module is further configured to schedule the data packet based on the achievable packet rate.

3. The networking device (100) according to claim 2, wherein the device (100) is further configured to receive from the destination endpoint (110-112, 400-402) the achievable packet rate.

4. The networking device (100) according to claim 3, wherein the received achievable packet rate corresponds to an air-interface bandwidth between the endpoint (300) and an access point (300).

5. The networking device (100) according to claim 1, wherein the link properties comprise a one-way delay between the device and destination endpoint.

6. The networking device (100) according to claim 5, wherein the scheduling module is a deadline-aware scheduler and the scheduling module is further configured to calculate a deadline of the data packet based on the one-way delay.

7. Method for scheduling the forwarding of data packets from source to destination endpoints, the method comprising:
- determining link properties of a data packet's path from the device to a destination endpoint; and
- scheduling the forwarding of the data packet based on the link properties.

8. A computer program product comprising a computer-executable instructions for performing the method according to claim 7 when the program is run on a computer.

9. A computer readable storage medium comprising the computer program product according to claim 8.

10. A data processing system programmed for carrying out the method according to claim 7.
